# EUROPÄISCHE PATENTSCHRIFT

(11) **EP 2 376 557 B1**
(45) Veröffentlichungstag und Bekanntmachung des Hinweises auf die Patenterteilung: **05.04.2017**
(21) Anmeldenummer: 09765113.7
(22) Anmeldetag: 09.12.2009
(51) Int. Cl.: C08G 69/36, B01D 1/02

(54) **VERFAHREN ZUR KONTINUIERLICHEN HERSTELLUNG VON COPOLYAMIDEN AUS LACTAMEN UND SALZEN AUS DIAMINEN UND DICARBONSÄUREN**
PROCESS FOR CONTINUOUSLY PREPARING COPOLYAMIDES FROM LACTAMS AND SALTS OF DIAMINES AND DICARBOXYLIC ACIDS
PROCÉDÉ DE PRÉPARATION CONTINUE DE COPOLYAMIDES À PARTIR DE LACTAMES ET DE SELS DE DIAMINES ET D'ACIDES DICARBOXYLIQUES

(30) Priorität: 12.12.2008 EP 08171542
(43) Veröffentlichungstag der Anmeldung: 19.10.2011
(73) Patentinhaber: BASF SE, 67056 Ludwigshafen am Rhein (DE)
(72) Erfinder: PLACHETTA, Christoph, 67117 Limburgerhof (DE); GERSTLAUER, Achim, 67117 Limburgerhof (DE); LANG, Reinhard, 67434 Neustadt (DE); SAUER, Thomas, 67246 Dirmstein (DE); BECKER, Jens, 67304 Eisenberg (DE)
(74) Vertreter: BASF IP Association
(86) Internationale Anmeldenummer: PCT/EP2009/066692
(87) Internationale Veröffentlichungsnummer: WO 2010/066769

(56) Entgegenhaltungen:
- EP-A1- 0 393 546
- EP-A2- 1 667 051
- WO-A1-2007/090768
- DE-A1- 19 923 439
- FR-A1- 2 914 308

## Beschreibung

Aus der DD-Patentschrift 110 507 ist ein Verfahren zur Herstellung von Copolyamiden aus Caprolactam und Salzen aus Diaminen und Dicarbonsäuren, z. B. AH-Salz, bekannt, bei dem man einem VK-Rohr von oben Caprolactam, AH-Salz und Wasser zuführt und am unteren Teil das entsprechende Copolyamid entnimmt. Das Verfahren hat den Nachteil, dass mit den am VK-Rohr oben entweichenden Dämpfen Diamin mit ausgetragen wird und verloren geht. Ferner hat das Verfahren den Nachteil, dass durch das mit der zugeführten AH-Salzlösung freiwerdende Wasser eine präzise Temperaturführung im VK-Rohrkopf erheblich beeinträchtigt wird.

Unter Vermeidung dieser Nachteile wird in der EP-A-0 393 546 ein kontinuierliches Verfahren zur Herstellung von Copolyamiden aus Caprolactam und Salzen aus Diaminen und Dicarbonsäuren beschrieben, bei dem man Caprolactam zusammen mit Polyamid bildenden Verbindungen aus Dicarbonsäuren und Diaminen von oben nach unten durch ein senkrecht stehendes Polymerisationsrohr bei Polyamid bildenden Temperaturen unter erhöhtem Druck und unter gleichzeitiger Verdampfung von Wasser durch eine rohrförmige Vorkondensationszone leitet. Dabei bilden sich eine Dampfphase und ein Präpolymer bei einer Temperatur über dem Schmelzpunkt des Präpolymeren. Die Dampfphase wird von der Präpolymerschmelze getrennt und in eine Kolonne geführt, in der Wasserdampf und eine wässrige Diaminlösung getrennt werden und die Diamine enthaltende wässrige Lösung in die Polymerisation zurückgeführt wird. Anschließend wird die Präpolymerschmelze mit geschmolzenem Caprolactam gemischt, und das Gemisch aus Präpolymerisat und Caprolactam wird von oben nach unten durch ein senkrecht stehendes Polymerisationsrohr geleitet, um so ein Copolyamid zu erhalten.

Der Nachteil dieses Verfahrens besteht darin, dass das Präpolymer aus der Vorkondensationszone bereits aus Blöcken von niedermolekular kondensierten Diaminen und Dicarbonsäuren besteht, die auch in der anschließenden Polymerisation mit Caprolactam noch als Blöcke erhalten bleiben. Eine bessere statistische Verteilung der Komponenten findet nicht mehr statt. Man benötigt so mehr Salz aus Diaminen und Dicarbonsäuren, um zum gewünschten Copolymerschmelzpunkt zu gelangen. Außerdem neigen so hergestellte Copolymere mehr zur Verfärbung.

Es ist deshalb Aufgabe der vorliegenden Erfindung, ein kontinuierliches Verfahren zur Herstellung von Copolyamiden aus Lactamen (insbesondere Caprolactam) und Salzen aus Diaminen und Dicarbonsäuren zur Verfügung zu stellen, bei dem die statistische Verteilung der Monomerbausteine verbessert ist.

Diese Aufgabe wird gelöst durch ein Verfahren zur kontinuierlichen Herstellung von Copolyamiden aus Lactamen und Salzen aus Diaminen und Dicarbonsäuren, bei dem man Lactame zusammen mit Salzen aus Diaminen und Dicarbonsäuren von oben nach unten durch ein senkrecht stehendes Polymerisationsrohr bei Polyamid bildenden Temperaturen leitet, dadurch gekennzeichnet, dass man
a) eine wässrige Lösung von Lactamen mit Salzen aus Diaminen und Dicarbonsäuren unter erhöhtem Druck, der größer ist als der Dampfdruck der sich ergebenden Mischung, in einer Mischapparatur bei einer Temperatur von 80 bis 300°C intensiv vermischt,
b) die so erhaltene Mischung einem beheizten Wendelrohrverdampfer zuführt, in dem sich bei einer Temperatur von 140 bis 300°C eine flüssige Phase und eine Dampfphase ausbildet, wobei man in die Mischung vor dem Wendelrohr gegebenenfalls noch einen Strom aus Wasserdampf und/oder Inertgas einleitet und beim Hindurchführen der Mischung durch das Wendelrohr eine Entspannung auf etwa Atmosphärendruck erfolgt,
c) die in Stufe b) gebildete Dampfphase von der flüssigen Phase abtrennt und in einer Kolonne in Wasserdampf und in Diamine, Dicarbonsäuren und Lactame enthaltende organische Komponenten trennt und die organischen Komponenten in die Polymerisation in Stufe d) zurückführt,
d) die flüssige Phase aus dem Wendelrohr der Stufe b) mit den organischen Komponenten der Stufe c) gemischt von oben nach unten durch ein senkrecht stehendes Polymerisationsrohr bei Polyamid bildenden Temperaturen leitet und ein Copolyamid erhält,
   wobei man die aus der Mischung beim Durchströmen des Wendelrohres sich bildende Dampfphase von der flüssigen Phase im Kopf des senkrecht stehenden Polymerisationsrohres trennt und man die Dampfphase aus dem Kopf des Polymerisationsrohres in einer Kolonne in Wasserdampf und in eine Diamine, Dicarbonsäuren und Lactame enthaltende organische Phase trennt und die organische Phase in den Kopf des senkrecht stehenden Polymerisationsrohres zurückführt.

Das erfindungsgemäße Verfahren hat den Vorteil, dass es Copolyamide liefert, deren Co-Monomerbausteine deutlich statistischer in der Polymerkette verteilt sind als es nach bekannten Verfahren möglich ist. Dadurch kann der Anteil von Salzen aus Diaminen und Dicarbonsäuren im Vergleich zu herkömmlichen Verfahren reduziert werden.

Ferner hat das neue Verfahren den Vorteil, dass sich die so hergestellten Copolyamide durch verbesserte Produkteigenschaften (z. B. geringere Eigenfarbe) auszeichnen.

Der Einsatz von Wendelrohrverdampfern bei der Herstellung und Aufarbeitung von Polymeren ist an sich bekannt. Die WO 2008/049786 beschreibt die Verwendung von Wendelrohr-Verdampfern bei der Herstellung von Polyamiden. Die Wendelrohrverdampfer werden dabei zur Aufkonzentrierung wässriger Extraktlösungen aus der Extraktion von Polyamiden auf Basis von Polyamid-6 verwendet.

Den Einsatz eines Wendelrohrverdampfers bei der Polyamid-Herstellung beschreibt FR-A-2 914 308. Im dort beschriebenen Verfahren erfolgt die Polykondensation zum Großteil in einem Wendelrohr, das gefolgt wird von einer Verdampfungskammer zur Abtrennung gasförmiger Bestandteile und nachfolgendem Rohrreaktor. Im Wendelrohrverdampfer beträgt der Druck am Ausgang des Wendelrohrverdampfers mehr als Atmosphärendruck, vorzugsweise mehr als 0,5 MPa, besonders bevorzugt mehr als 1,0 MPa. Ferner wird der Austrag aus dem Wendelrohrverdampfer einer Vorrichtung zugeführt, in der wenigstens ein Teil des Dampfanteils entfernt wird. In dieser Kammer wird die Dampfphase von der Flüssigphase, die sich am Boden absetzt, abgetrennt. Dabei wird die Kammer ebenfalls bei höherem Druck als Atmosphärendruck betrieben, vorzugsweise zwischen 0,5 und 2,5 MPa.

Erst an diese Stufe schließt sich ein Rohrreaktor an, der zum Druckabbau dienen soll (Stufe 3). Es soll eine nicht adiabatische Druckverminderung erfolgen, so dass ein Druck in der Nähe des Atmosphärendrucks erhalten wird.

Die EP-B-1 113 848 betrifft Verfahren zum Eindampfen von Polymerlösungen thermoplastischer Polymere. Es werden dabei Polymerlösungen mit einem Polymeranteil von 5 bis 20 Gew.-% in einer Sequenz von Schlangenrohrverdampfer mit nachgeschalteten Rohrbündelwärmetauschern mit nachgeschaltetem Abscheider aufkonzentriert.

Die EP-B-1 173 264 betrifft ein Verfahren und eine Vorrichtung zum Eindampfen von Polymerlösungen thermoplastischer Polymere. Es wird ebenfalls eine Polymerlösung mit einem Polymeranteil von 5 bis 20 Gew.-% in einer Sequenz aus Schlangenrohrverdampfer mit nachgeschaltetem Abscheider und nachfolgendem Rohrbündelwärmetauscher mit nachgeschaltetem Abscheider aufkonzentriert.

Die EP-B-1 007 582 betrifft Verfahren zur Herstellung von Polyamid-Vorpolymeren, bei denen eine Vorpolymerisation in Gegenwart einer fließenden Dampfphase durchgeführt wird.

Erfindungsgemäß verwendet man als Lactamkomponenten bevorzugt solche mit 6 bis 12 Ringgliedern wie z. B. Valerolactam, Caprolactam, Önanthlactam, Capryllactam oder Lauryllactam, bevorzugt Caprolactam, sowie deren Mischungen.

Erfindungsgemäß verwendet man als Copolyamidkomponenten Salze aus, bevorzugt äquimolaren, Mengen an Diaminen und Dicarbonsäuren in wässriger Lösung. Bevorzugte Diamine haben die Formel I

H₂N-R₁-NH₂ I,

in der R₁ einen Alkylenrest mit 4 bis 16 Kohlenstoffatomen, insbesondere 4 bis 8 Kohlenstoffatomen, der einen Cycloalkylenrest aufweisen kann, oder einen 1,3- oder 1,4-Phenylenrest bezeichnet. Geeignete Verbindungen sind beispielsweise 1,4-Diaminobutan, Hexamethylendiamin, Octamethylendiamin, Decamethylendiamin, oder 1,3-Phenylendiamin oder 1,4-Phenylendiamin. Besondere technische Bedeutung haben Diamine der Formel I erlangt, in denen R₁ einen geradkettigen Alkylenrest mit 4 bis 8 Kohlenstoffatomen bezeichnet. Besondere technische Bedeutung hat Hexamethylendiamin erlangt.

Bevorzugte Dicarbonsäuren haben die Formel II

HOOC-R₂-COOH II,

in der R₂ einen Alkylenrest mit 4 bis 12 Kohlenstoffatomen, insbesondere 4 bis 8 Kohlenstoffatomen, der einen Cycloalkylenrest aufweisen kann, bezeichnet oder einen 1,3- oder 1,4-Phenylenrest bedeutet. Geeignete Dicarbonsäuren sind beispielsweise Adi-Adipinsäure, Azelainsäure, Sebazinsäure, Korksäure, Dodecandisäure, oder Terephthalsäure oder Isophthalsäure. Besonders bevorzugt sind Adipinsäure, Dodecandisäure, Terephthalsäure und Isophthalsäure. Besondere technische Bedeutung haben Salze aus Adipinsäure/Hexamethylendiamin, Terephthalsäure/Hexamethylendiamin und Isophthalsäure/Hexamethylendiamin, Sebazinsäure/Hexamethylendiamin sowie Dodecandisäure/Hexamethylendiamin erlangt oder auch Mischungen zweier oder mehrerer dieser Salze.

Im erfindungsgemäßen Verfahren können äquimolare Mengen an Diaminen und Dicarbonsäuren eingesetzt werden. Falls gewünscht, kann auch mit einem Überschuss an Diaminen oder Dicarbonsäuren gearbeitet werden. Häufig wird mit einem geringfügigen Überschuss an Diaminen gearbeitet, da diese flüchtiger sind als die Dicarbonsäuren und im Verfahrensverlauf Verluste an Diaminen auftreten können. Durch die Auftrennung der Dampfphase nach dem Wendelrohr und Rückführung der organischen Komponenten in die Polymerisation werden erfindungsgemäß Monomerverluste weitgehend vermieden. Deswegen wird vorzugsweise in etwa stöchiometrischem Bereich aus Diaminen und Dicarbonsäuren gearbeitet. Abweichungen von etwa 5 %, vorzugsweise etwa 2,5 %, insbesondere etwa 1 % von der Stöchiometrie sind erfindungsgemäß möglich.

Bevorzugt setzt man Diamine und Dicarbonsäuren in äquimolaren Mengen ein. Die verwendeten wässrigen Lösungen haben in der Regel einen Gehalt von 30 bis 70 Gew.-%, insbesondere 50 bis 65 Gew.-% an den genannten Salzen. Wässrige Lösungen haben in der Regel einen pH-Wert von 7,7 bei 20 °C. Vorteilhaft geht man von wässrigen Lösungen mit einer Temperatur von 80 bis 100 °C aus.

Man verwendet zusätzlich zu den Salzen aus Diaminen und Dicarbonsäuren Lactam, insbesondere Caprolactam. Es besteht auch die Möglichkeit, dass man eine wässrige Lösung von (Capro)lactam verwendet, die beispielsweise 60 bis 90 Gew.-% (Capro)lactam enthält und durch Extraktion des erzeugten Copolyamids mit Wasser und Eindampfen des wässrigen Extrakts vorzugsweise unter Zusatz der 0,5 bis 2-fachen Menge an Frischlactam, bezogen auf Extraktlactam erhalten worden ist. Eine geeignete Lösung erhält man beispielsweise nach dem in der DE-A 25 01 348 beschriebenen Verfahren. Die Menge an Salzen aus Diaminen und Dicarbonsäuren beträgt, bezogen auf die gesamte Monomermenge, vorzugsweise 0,2 bis 40 mol-%, besonders bevorzugt 0,5 bis 20 mol-%.

Erfindungsgemäß wird in Stufe a) eine wässrige Lösung von Lactamen mit Salzen aus Diaminen und Dicarbonsäuren unter erhöhtem Druck, der größer ist als der Dampfdruck der sich ergebenden Mischung, in einer Mischapparatur bei einer Temperatur von 80 bis 300°C, bevorzugt 130 bis 200°C, intensiv vermischt. Dabei werden bevorzugt äquimolare Mengen aus Diaminen und Dicarbonsäuren eingesetzt. Unter "erhöhtem Druck" wird ein Druck verstanden, der höher ist als Normaldruck und als der Dampfdruck der sich ergebenden Mischung. Bevorzugt wird in einem Druckbereich von 2,5 bis 50 bar, vorzugsweise 5 bis 20 bar gearbeitet. Die Mischapparatur kann aus beliebigen geeigneten Mischapparaturen, insbesondere für Flüssigkeiten, ausgewählt werden. Dabei handelt es sich vorzugsweise um kontinuierliche Mischer, insbesondere um statische Mischer. Die Mischereinbauten können so gewählt werden, dass im Viskositätsbereich der Monomerlösungen eine möglichst homogene Vermischung in kurzer Zeit stattfindet.

Unter "intensiver" Vermischung wird eine solche Vermischung verstanden, die zu einer weitgehenden oder vollständigen Homogenisierung des wässrigen Einsatzmonomerengemischs führt.

Erfindungsgemäß leitet man in der Stufe (b) eine wässrige Lösung von Salzen aus bevorzugt äquimolaren Mengen an Diaminen und Dicarbonsäuren sowie Lactam(en) unter erhöhtem Druck und gleichzeitiger Verdampfung von Wasser durch einen Wendelrohrverdampfer unter Bildung einer Dampfphase und einer flüssigen Phase. Die wässrige Lösung von Salzen aus äquimolaren Mengen an Diaminen und Dicarbonsäuren sowie Lactamen werden dabei, gegebenenfalls in einem statischen Mischer, je nach gewünschter Copolymerzusammensetzung vorgemischt, bevor sie in den Wendelrohrverdampfer eingeleitet werden. Die Temperatur im, vorzugsweise statischen, Mischer beträgt 80 bis 300 °C, bevorzugt 130 bis 200 °C.

Gegebenenfalls kann vor dem Wendelrohr in die Mischung noch Wasserdampf und/oder Inertgas eingeleitet werden. Inertgas ist z. B. Stickstoff, Kohlendioxid oder Argon.

Beim Wendelrohrverdampfer handelt es sich vorzugsweise um ein Doppelmantelrohr, in dem ein Heizmedium im Heizmantel geführt wird und zur Temperierung dient. Technische Doppelmantelrohre, die erfindungsgemäß bevorzugt eingesetzt werden, weisen eine Länge im Bereich von 20 bis 100 m, besonders bevorzugt 40 bis 80 m, auf, wobei sie einen Innendurchmesser von bevorzugt 10 bis 150 mm, insbesondere 15 bis 60 mm aufweisen. Der Wendelrohrverdampfer verursacht in der erfindungsgemäßen wässrigen Lösung von Salzen aus äquimolaren Mengen an Diaminen und Dicarbonsäuren sowie Lactamen eine Wasserverdampfung, so dass es zu einer Volumenexpansion kommt. Typischerweise liegt im Wendelrohrverdampfer im Downstream-Bereich eine Kernströmung durch Gas (Wasserdampf) vor, während ein Wandfilm als flüssige Phase vorliegt. Bei Bedarf kann am Einlass oder "Kopf" des Wendelrohres ein Inertgas zudosiert werden, beispielsweise Wasserdampf, N₂, Ar, CO₂ oder diese enthaltende Gasgemische, z. B. 16 bar Wasserdampf, um den Kernstrom zu erzeugen oder zu verstärken. Dies kann z. B. dann erforderlich sein, wenn nicht genügend Wasser in der wässrigen Lösung aus Salzen von Diaminen und äquivalenten Mengen an Dicarbonsäure und Caprolactam vorhanden ist, beispielsweise bei Gesamtkonzentrationen der organischen Komponenten oberhalb von 98 %. Das zugesetzte Gas dient dann als Trägergas. Am Ende des Wendelrohrverdampfers kommt es dabei typischerweise zu einer Phasentrennung zwischen Dampfphase und flüssiger Phase. Die Kernströmung durch das Gas kann beispielsweise auf die Querschnittsfläche des Wendelrohrs bezogen einen Flächenanteil von 15 bis 35 %, insbesondere etwa 25 % ausmachen, während der Wandfilm, d.h. die flüssige Phase, 65 bis 85 %, insbesondere etwa 75 % der Querschnittsfläche ausmachen kann. Im erfindungsgemäßen Verfahren kann der Wendelrohrverdampfer als Ventil dienen, da am Verdampfereingang ein hoher Druck, beispielsweise 5 bis 20 bar, vorliegt, während am Ausgang des Reaktors etwa Atmosphärendruck herrscht. Der Druck wird damit kontinuierlich über die Länge des Wendelrohrs abgebaut. Der Wendelrohrverdampfer kann wie in WO 2008/049786 beschrieben aufgebaut sein.

Beim Durchgang des Reaktionsgemisches durch den Wendelrohrverdampfer stellt sich eine Temperatur von 140 bis 300 °C, vorzugsweise 160 bis 200 °C, vorteilhaft 175 bis 195 °C ein. Gleichzeitig findet ein Druckabbau auf etwa Atmosphärendruck (1 bar), und eine Abtrennung einer gasförmigen Phase unter Erhalt der flüssigen Phase statt. Die Entspannung des Reaktionsgemisches auf etwa Atmosphärendruck erfolgt damit durch Hindurchführen durch das Wendelrohr. Die gasförmige Phase enthält überwiegend Wasserdampf, der nach dem Austritt aus dem Wendelrohrverdampfer von den organischen Bestandteilen getrennt wird. Die Dampfphase wird über eine Kolonne abgeführt, wobei die Kolonne wassergespült sein kann.

Der Ausdruck "etwa Atmosphärendruck" beschreibt den Atmosphärendruck (1 bar) mit Abweichungen von -0,5 bis +1 bar, insbesondere ±0,5 bar.

Für eine vorteilhafte Arbeitsweise des Wendelrohrs liegen die Verweilzeiten vorzugsweise im Bereich von 40 bis 120 Sekunden. Sofern größere Verweilzeiten von 3 bis 10 Minuten angewandt werden, ist der Wendelrohrverdampfer vorteilhaft mit Einbauten versehen, wie Füllkörpern, Raschigringen oder Pallringen, insbesondere Geweberingen aus Drahtnetz, um eine große Oberfläche zu erzielen.

Vorzugsweise findet im Wendelrohrverdampfer keine chemische Umsetzung, etwa Polymerisation, statt, sondern es tritt nur eine Trennung in Dampf/Gasphase und flüssige Phase ein. Wasser wird aus dem Gemisch dampfförmig abgetrennt.

Das aus dem Wendelrohr austretende zweiphasige Gemisch aus Dampfphase und flüssiger Phase, bestehend aus Salzen aus äquimolaren Mengen an Diaminen und Dicarbonsäuren sowie Lactamen bzw. diese enthaltend, wird nachfolgend getrennt. Die Trennung erfolgt in der Regel von selbst aufgrund der physikalischen Unterschiede in einem Gefäß. Man leitet das zweiphasige Gemisch aus Dampfphase und flüssiger Phase in den Dampfraum am Kopf der rohrförmigen Polymerisationszone des senkrecht stehenden Polymerisationsrohres (VK-Rohr) und führt dort die Trennung durch.

Die anfallende Dampfphase wird in einer Kolonne in Wasserdampf, Diamin, Dicarbonsäure und Caprolactam aufgetrennt, und alle organischen Komponenten werden in die Polymerisation in Stufe d) zurückgeführt. Die Trennung der Dampfphase erfolgt vorteilhaft in einer Kolonne unter Rektifikation. Geeignete Kolonnen sind beispielsweise Füllkörperkolonnen, Packungskolonnen, Glocken-, Ventilboden- oder Siebbodenkolonnen mit 5 bis 15 theoretischen Trennstufen. Die Kolonne wird zweckmäßig unter den identischen Bedingungen wie bei der Trennung von Dampfphase und flüssiger Phase, z. B. von 0,5 bis 2,5 bar absolut oder unter dem Druck der Polymerisationszone betrieben. Vorteilhaft gibt man am Kopf der Kolonne je kg Dampf 0,1 bis 0,5 l Wasser auf, um den Trenneffekt zu verbessern. Als Kolonnenablauf erhält man eine flüssige Phase enthaltend oder bestehend aus Diaminen, Dicarbonsäuren und Lactamen. Am Kopf der Kolonne fällt Wasserdampf an.

Man leitet die flüssige Phase enthaltend oder bestehend aus Diaminen, Dicarbonsäuren und Lactamen in den Kopf des VK-Rohres zurück.

Die organische Phase aus dem Wendelrohr, enthaltend oder bestehend aus Salzen von Diaminen und (annähernd) äquivalenten Mengen an Dicarbonsäuren sowie Lactamen und der Rücklauf aus der Trennkolonne werden vorzugsweise durch Rühren im Kopf des senkrecht stehenden Polymerisationsrohres (VK-Rohr) durchmischt.

Anschließend wird das Gemisch aus dem VK-Rohrkopf von oben nach unten durch ein senkrecht stehendes Polymerisationsrohr (VK-Rohr) bei Polyamid bildenden Temperaturen geleitet, und ein Copolyamid wird erhalten. Im oberen Drittel des Polymerisationsrohres hält man in der Regel eine Temperatur von vorzugsweise 250 bis 285 °C, insbesondere 255 bis 275°C, ein. Im Verlauf des Polymerisationsrohres wird die Schmelze so temperiert, dass man am unteren Ende eine Schmelze mit vorzugsweise 240 bis 260°C. erhält. Die Verweilzeit im Polymerisationsrohr beträgt bevorzugt 8 bis 24 Stunden. Das so erhaltene Copolyamid hat vorzugsweise eine relative Viskosität von 2,0 bis 3,0 und einen Gehalt an mit Wasser extrahierbaren Anteilen von 3,5 bis 12 Gew.-%, insbesondere 5 bis 11 Gew.-%. Die so erhaltene Copolyamidschmelze wird im Allgemeinen in Stränge vergossen, verfestigt und granuliert oder direkt mittels einer Unterwassergranulierung in einem fließenden Wasserstrom granuliert. Geeignete Verfahren sind dem Fachmann bekannt.

Das so erhaltene Granulat kann dann kontinuierlich im Gegenstrom mit Wasser bei einer Temperatur von bevorzugt 80 bis 120 °C extrahiert werden. Der so erhaltene wässrige Extrakt wird dann vorteilhaft nach Zusatz der 0,5- bis 2-fachen Menge an frischem Caprolactam, bezogen auf Extraktcaprolactam, eingedampft. Ein geeignetes Verfahren wird beispielsweise beschrieben in der DE-A 25 01 348.

Im Allgemeinen wird das extrahierte Copolyamid anschließend getrocknet. Vorteilhaft wird es hierbei unter Mitverwendung von Inertgasen wie Stickstoff oder überhitztem Wasserdampf als Wärmeträger im Gegenstrom bis zur gewünschten Viskosität, z. B. bei einer Temperatur von 150 bis 185 °C, getempert.

Copolyamide, die nach dem Verfahren der Erfindung erhältlich sind, haben in der Regel 60 bis 99 Gew.-%, insbesondere 70 bis 98 Gew.-% Polyamid-6-Einheiten und eignen sich zur Herstellung von Formkörpern durch Spritzguss oder Extrusion, ferner zur Herstellung von Fäden, Fasern und Folien.

Die Erfindung wird nachstehend anhand von Beispielen näher erläutert.

### Beispiele:

### Beispiel 1

Die Herstellung der Copolyamide aus Polyamid-6- und Polyamid-6.6-Einheiten erfolgt in einer Verfahrenssequenz, die von 62 Gew.-%iger wässriger AH-Salzlösung und Caprolactam ausgeht. Die AH-Salzlösung wird auf 95 °C erwärmt und mit dem getrennt auf 200 °C erwärmten Caprolactam in einem statischen Mischer vermischt. Die Mischung wird bei einem Druck von etwa 9 bar und einer Temperatur von etwa 180 °C über ein Drucksteuerungsventil in einen Wendelrohrverdampfer geführt. Gleichzeitig wird am Eingang des Wendelrohrverdampfers Wasserdampf zudosiert. Der Druck am Eingang des Wendelrohrverdampfers beträgt etwa 5 bar. Der Dampfeintrag erfolgt zum Einbringen von Energie in das Monomerengemisch und um das Gemisch durch das nachfolgende Wendelrohr zu blasen. Beim Wendelrohrverdampfer handelt es sich um ein Doppelmantelrohr, in dem ein Heizmedium im Heizmantel geführt wird und zur Temperierung dient. Die Länge liegt im Bereich von 20 bis 100 m, und der Innendurchmesser beträgt bevorzugt 15 bis 60 mm. Das Verdampferrohr ist gemäß einer Schraube oder Helix angeordnet. Der Wendelrohrverdampfer verursacht im wässrigen Gemisch eine Wasserverdampfung, so dass es zu einer Volumenexpansion kommt.

Dabei wird über dem Wendelrohrverdampfer der Druck kontinuierlich abgebaut. Im Wendelrohrverdampfer liegen hohe Strömungsgeschwindigkeiten vor, da viel Dampf entsteht. Die starke Dampfentstehung führt zu sehr kurzen Verweilzeiten und zu einer Selbstreinigung des Wendelrohrs. Das aus dem Wendelrohrverdampfer mit einer Temperatur von 195 °C bei etwa Atmosphärendruck austretende Gemisch wird dem Kopf eines VK-Rohrs zugeführt. Am Kopf des VK-Rohrs herrscht eine Temperatur von etwa 258 °C. Die Dampfphase wird über eine Kolonne am Kopf des VK-Rohrs abgetrennt und nach einer Kondensation ausgetragen. Das verbleibende Monomerengemisch durchläuft das VK-Rohr, das in Segmenten beheizt wird, wobei die Temperatur zum Ausgang des VK-Rohrs hin stufenweise über die Temperaturen von 265 °C und etwa 270 °C auf etwa 250 °C am Ausgang des VK-Rohrs abnimmt. Das VK-Rohr wird beim sich einstellenden hydrostatischen Systemdruck betrieben. Am Ausgang des VK-Rohrs wird eine PA6/6.6-Schmelze erhalten, die über eine Austragspumpe direkt einer Stranggranulierung oder Unterwassergranulierung mit nachfolgender Extraktionsstufe und wiederum nachfolgender Trocknung zugeführt wird. An die Trocknung schließt sich eine Nachkondensation an.

Die Verweilzeit im Wendelrohrverdampfer liegt im Minutenbereich, während die Verweilzeit im VK-Rohr etwa 12 Stunden beträgt.

Im statischen Mischer und im Wendelrohr kommt es zu keiner Umsetzung. Die Umsetzung zum Polyamid findet erst im VK-Rohr statt.

Gegenüber üblichen Verdampfern wie Rohrbündelverdampfern erlaubt der Wendelrohrverdampfer eine schonendere Mischung und Wasserverdampfung bei niedriger Temperatur, so dass die thermische Belastung des Monomerengemisches vermindert wird.

Bezogen auf die Gesamtmonomeren werden 20 Gew.-% AH-Salz oder weniger eingesetzt. Ein Vorteil des Verfahrens ist es, mit einem geringeren Anteil an Polyamid-6.6 denselben Schmelzpunkt wie für ein nach üblichen Verfahren, wie es beispielsweise in EP-A-0 393 546 beschrieben, hergestelltes Copolyamid zu erhalten, wobei zudem weniger Vergilbung auftritt. Die Verringerung des Schmelzpunktes bei gleichem Polyamid-6.6-Anteil und die Verminderung der Vergilbung werden auf eine bessere statistische Verteilung der Polyamid-6.6-Einheiten im Copolyamid zurückgeführt.

### Beispiel 2

In verschiedenen Produktions- und Versuchsstraßen wurden PA 6 / 6.6 Copolymere mit verschiedenen relativen Viskositäten hergestellt. Dabei lag der Druck im Wendelrohr bei 5 bar und die Temperatur bei 195 °C. Die Verweilzeit betrug etwa eine Minute. Die Polymerisation im VK-Rohr wurde bei einer Temperatur von 240 bis 290 °C, einem Druck von 300 m bar und einer Verweilzeit von 12 Stunden durchgeführt. Zum Vergleich wurden die in EP-A-0-393-546 beschriebenen Betriebsparameter verwendet. Die Bestimmung der Aminoendgruppen und Carboxylendgruppen (AEG und CEG) erfolgte nach der in WO 95/01389, Seite 6, Zeile 35 bis Seite 7, Zeile 40 beschriebenen Methode. Die relative Viskosität (RV) wurde bei einer Temperatur von 25 °C und einer Konzentration von 1 g Polymer pro 100 ml in 96 Gew.-%iger Schwefelsäure bestimmt.

In der nachstehenden Tabelle 1 sind die Zusammensetzungen und die Eigenschaften der Produkte angegeben. Verglichen werden PA 6/6.6 Copolymere mit einer relativen Viskosität von RV=3,3 und RV=4,0 die nach der erfindungsgemäßen Technologie und nach der bekannten Technologie (siehe EP 393 546) hergestellt wurden. Für eine relative Viskosität von RV=3,3 wurde der PA 6.6 Anteil so eingestellt, dass sich für beide Technologien ein Schmelzpunkt von 196°C ergab. Für eine relative Viskosität von RV=4,0 wurde bei der bekannten Technologie der PA 6.6 Anteil so eingestellt, dass ein Schmelzpunkt von 192°C resultierte. Für die erfindungsgemäße Technologie wurde der PA 6.6 Anteil so eingestellt, dass ein Schmelzpunkt von 189 °C resultierte. Dies ist für die bekannte Technologie nur durch sehr hohe PA 6.6 Anteile von > 20 Gew.-% erreichbar.

**Tabelle 1: Zusammenfassung der Eigenschaften der hergestellten PA 6/6.6 Copolymere**

| PA 6/6-6 Copolymer | relative Viskosität | Schmelzpunkt | PA 6.6 Anteil | AEG | Apha-Zahl | Tkmax |
|---|---|---|---|---|---|---|
| | [-] | [°C] | [Gew.-%] | [mmol/kg] | [-] | [°C] |
| Erfindung | 3,3 | 196 | 13,5 - 14,5 | 45,0 - 47,0 | 4 - 7 | 121 - 122 |
| Vergleich | 3,3 | 196 | 17,0 - 18,0 | ≈ 48 | 7 - 10 | 122 |
| Erfindung | 4,0 | 189 | 17,5 - 18,5 | 36,5 - 38,5 | 6 - 8 | 118 |
| Vergleich | 4,0 | 192 | 18,5 - 19,5 | ≈ 40 | 8 - 10 | 118 - 128 |

Tabelle 1 zeigt, dass nach der erfindungsgemäßen Technologie hergestellte PA 6/6.6 Copolymere mit einer relativen Viskosität von RV=3,3 einen deutlich geringeren PA 6.6 Anteil benötigen, um im Rahmen der Schmelzpunktsdepression des PA 6 einen Schmelzpunkt von 196 °C zu erreichen.

Für eine Viskosität von RV = 4,0 wird deutlich, dass nach der erfindungsgemäßen Technologie hergestellte PA 6/6.6 Copolymere bei einem vergleichbaren PA 6.6 Anteil einen deutlich geringeren Schmelzpunkt von 189 °C im Vergleich mit 192 °C aufweisen.

Die Eigenfarbe (Apha-Werte) zeigt für beide betrachtete Viskositäten geringere Werte und damit weitere Vorteile für die erfindungsgemäße Technologie. Die restlichen Produkteigenschaften der Copolymere, wie z. B. die Aminoendgruppen oder das Temperaturmaximum des Kristallisationspeaks (aus DSC-Analyse)ₓ, sind vergleichbar. Diese verbesserten Produkteigenschaften der PA 6/6.6 Copolymere führen zu Verbesserungen im Rahmen der Weiterverarbeitung wie z. B. transparentere Filme im Rahmen der Folienherstellung.

Um die verbesserten Eigenschaften der nach der erfindungsgemäßen Technologie hergestellten PA 6/6.6 Copolymere besser zu verstehen, wurden die in der nachfolgenden Tabelle 2 dargestellten ¹³C-NMR Analysen durchgeführt.

**Tabelle 2: ¹³C-NMR Analysen der hergestellten PA 6/6.6 Copolymere.**

| PA 6/6-6 Copolymer | CPL | PA 6.6 Anteil [Gew.-%] | CPL-CPL Bindung [mol %] | CPL-HMD Bindung [mol %] | ADS-CPL Bindung [mol %] | ADS-HMD Bindung [mol %] |
|---|---|---|---|---|---|---|
| Erfindung | 3,3 | 13,5 - 14,5 | 80,0 | 9,6 | 9,6 | 0,8 |
| Vergleich | 3,3 | 17,0 - 18,0 | 76,5 | 10,1 | 10,2 | 3,2 |
| Erfindung | 4,0 | 17,5 - 18,5 | 68,8 | 14,0 | 14,0 | 3,2 |
| Vergleich | 4,0 | 18,5 - 19,5 | 70,4 | 12,3 | 12,3 | 5,0 |

| | | | | | | |
|---|---|---|---|---|---|---|
| Nomenklatur: CPL = Caprolactam HMD = Hexamethylendiamin ADS = Adipinsäure | | | | | | |

Die ¹³C-NMR Analysen zeigen den Anteil einzelner chemischer Bindungen in der Polymerkette. Von besonderem Interesse ist das Auftreten von direkten chemischen Bindungen zwischen Adipinsäure (ADS) und Hexamethylendiamin (HMD), welches auf die Existenz von PA 6.6 Blockstrukturen in der Polymerkette hindeutet.

Tabelle 2 zeigt, dass nach der erfindungsgemäßen Technologie hergestellte PA 6/6.6 Copolymere mit einer relativen Viskosität von RV = 3,3 einen deutlich geringeren Anteil an PA 6.6 Blockstrukturen aufweisen (0,8 mol % im Vergleich mit 3,2 mol %). Dies weist auf die vorher beschriebenen Vorteile des neuen Verfahrens im Vergleich mit dem in EP 393 546 beschriebenen Verfahren hin.

Für eine Viskosität von RV = 4,0 wird deutlich, dass nach der erfindungsgemäßen Technologie hergestellte PA 6/6.6 Copolymere mit 3,2 mol% im Vergleich mit 5 mol% ebenfalls einen deutlich geringeren Anteil an PA 6.6 Blockstrukturen aufweisen. Die Vorteile des erfindungsgemäßen Verfahrens sind somit unabhängig von der Viskosität des Endpolymers.

## Patentansprüche

1. Verfahren zur kontinuierlichen Herstellung von Copolyamiden aus Lactamen und Salzen aus Diaminen und Dicarbonsäuren, bei dem man Lactame zusammen mit Salzen aus Diaminen und Dicarbonsäuren von oben nach unten durch ein senkrecht stehendes Polymerisationsrohr bei Polyamid bildenden Temperaturen leitet, **dadurch gekennzeichnet, dass** man
a) eine wässrige Lösung von Lactamen mit Salzen aus Diaminen und Dicarbonsäuren unter erhöhtem Druck, der größer ist als der Dampfdruck der sich ergebenden Mischung, in einer Mischapparatur bei einer Temperatur von 80 bis 300°C intensiv vermischt,
b) die so erhaltene Mischung einem beheizten Wendelrohrverdampfer zuführt, in dem sich bei einer Temperatur von 140 bis 300°C eine flüssige Phase und eine Dampfphase ausbildet, wobei man in die Mischung vor dem Wendelrohr gegebenenfalls noch einen Strom aus Wasserdampf und/oder Inertgas einleitet und beim Hindurchführen der Mischung durch das Wendelrohr eine Entspannung auf etwa Atmosphärendruck erfolgt,
c) die in Stufe b) gebildete Dampfphase von der flüssigen Phase abtrennt und in einer Kolonne in Wasserdampf und in Diamine, Dicarbonsäuren und Lactame enthaltende organische Komponenten trennt und die organischen Komponenten in die Polymerisation in Stufe d) zurückführt,
d) die flüssige Phase aus dem Wendelrohr der Stufe b) mit den organischen Komponenten der Stufe c) gemischt von oben nach unten durch ein senkrecht stehendes Polymerisationsrohr bei Polyamid bildenden Temperaturen leitet und ein Copolyamid erhält,
wobei man die aus der Mischung beim Durchströmen des Wendelrohres sich bildende Dampfphase von der flüssigen Phase im Kopf des senkrecht stehenden Polymerisationsrohres trennt und man die Dampfphase aus dem Kopf des Polymerisationsrohres in einer Kolonne in Wasserdampf und in eine Diamine, Dicarbonsäuren und Lactame enthaltende organische Phase trennt und die organische Phase in den Kopf des senkrecht stehenden Polymerisationsrohres zurückführt.

2. Verfahren nach Anspruch 1, **dadurch gekennzeichnet, dass** man wässrige Lösungen von äquimolaren Mengen an Diaminen der Formel I
H₂N-R₁-NH₂ I,
in der R₁ einen Alkylenrest mit 4 bis 16 Kohlenstoffatomen, der einen Cycloalkylenrest aufweisen kann, oder einen 1,3- oder 1,4-Phenylenrest bezeichnet und Dicarbonsäuren der Formel II
HOOC-R₂-COOH II,
in der R₂ einen Alkylenrest mit 4 bis 12 Kohlenstoffatomen oder einen 1,3- oder 1,4-Phenylenrest bezeichnet, verwendet.

3. Verfahren nach Anspruch 1 oder 2, **dadurch gekennzeichnet, dass** man als Lactame solche mit 6 bis 12 Ringgliedern verwendet.

4. Verfahren nach Anspruch 3, **dadurch gekennzeichnet, dass** man als Lactam Caprolactam verwendet.

5. Verfahren nach einem der Ansprüche 1 bis 4, **dadurch gekennzeichnet, dass** man in Stufe (a) zusätzlich Lactam, das durch Extraktion des Copolyamids mit Wasser und anschließendes Eindampfen des wässrigen Extrakts unter Zugabe von Frischlactam erhalten worden ist, mit verwendet.

6. Verfahren nach einem der Ansprüche 1 bis 5, **dadurch gekennzeichnet, dass** man in der Stufe (a) eine Temperatur von 130 bis 200°C einhält.

7. Verfahren nach einem der Ansprüche 1 bis 6, **dadurch gekennzeichnet, dass** man in der Stufe (a) einen Druck von 5 bis 20 bar einhält.

8. Verfahren nach einem der Ansprüche 1 bis 7, **dadurch gekennzeichnet, dass** die Temperatur im Wendelrohrverdampfer 160 bis 300°C beträgt.

9. Verfahren nach einem der Ansprüche 1 bis 8, **dadurch gekennzeichnet, dass** die Menge an Salzen aus Diaminen und Dicarbonsäuren, bezogen auf die gesamte Monomermenge, 0,2 bis 40 mol-% beträgt.

## Claims

1. A process for continuously preparing copolyamides from lactams and salts of diamines and dicarboxylic acids, in which lactams together with salts of diamines and dicarboxylic acids are passed from the top downward through a vertical polymerization tube at polyamide-forming temperatures, which comprises
a) intensively mixing an aqueous solution of lactams with salts of diamines and dicarboxylic acids under elevated pressure which is greater than the vapor pressure of the mixture which arises in a mixing apparatus at a temperature of from 80 to 300°C,
b) feeding the mixture thus obtained to a heated helical tube evaporator in which a liquid phase and a vapor phase form at a temperature of from 140 to 300°C, a stream of water vapor and/or inert gas also optionally being introduced into the mixture upstream of the helical tube and the mixture being decompressed to about atmospheric pressure as it passes through the helical tube,
c) removing the vapor phase formed in stage b) from the liquid phase and separating it in a column into water vapor and into organic components comprising diamines, dicarboxylic acids and lactams, and recycling the organic components into the polymerization in stage d),
d) passing the liquid phase from the helical tube of stage b) mixed with the organic components of stage c) from the top downward through a vertical polymerization tube at polyamide-forming temperatures to obtain a copolyamide,
wherein the vapor phase which forms from the mixture as it flows through the helical tube is separated from the liquid phase in the top of the vertical polymerization tube and the vapor phase from the top of the polymerization tube is separated in a column into water vapor and into an organic phase comprising diamines, dicarboxylic acids and lactams, and the organic phase is recycled into the top of the vertical polymerization tube.

2. The process according to claim 1, wherein aqueous solutions of equimolar amounts of diamines of the formula I
H₂N-R₁-NH₂ I
in which R₁ denotes an alkylene radical which has from 4 to 16 carbon atoms and may have a cycloalkylene radical, or a 1,3- or 1,4-phenylene radical, and dicarboxylic acids of the formula II
HOOC-R₂-COOH II
in which R₂ denotes an alkylene radical having from 4 to 12 carbon atoms or a 1,3- or 1,4-phenylene radical, are used.

3. The process according to claim 1 or 2, wherein the lactams used are those having from 6 to 12 ring members.

4. The process according to claim 3, wherein the lactam used is caprolactam.

5. The process according to any one of claims 1 to 4, wherein lactam which has been obtained by extracting the copolyamide with water and subsequently concentrating the aqueous extract with addition of fresh lactam is additionally used in stage a).

6. The process according to any one of claims 1 to 5, wherein a temperature of from 130 to 200°C is maintained in stage (a).

7. The process according to any one of claims 1 to 6, wherein a pressure of from 5 to 20 bar is maintained in stage (a).

8. The process according to any one of claims 1 to 7, wherein the temperature in the helical tube evaporator is from 160 to 300°C.

9. The process according to any one of claims 1 to 8, wherein the amount of salts of diamines and dicarboxylic acids, based on the total amount of monomers, is from 0.2 to 40 mol%.

## Revendications

1. Procédé de fabrication continue de copolyamides à partir de lactames et de sels de diamines et d'acides dicarboxyliques, selon lequel des lactames sont conduits conjointement avec des sels de diamines et d'acides dicarboxyliques du haut vers le bas dans un tube de polymérisation vertical à des températures auxquelles un polyamide se forme, **caractérisé en ce que**
a) une solution aqueuse de lactames est mélangée intensivement avec des sels de diamines et d'acides dicarboxyliques sous une pression élevé, qui est supérieure à la pression de vapeur du mélange qui se forme, dans un appareil de mélange à une température de 80 à 300 °C,
b) le mélange ainsi obtenu est introduit dans un évaporateur à tube hélicoïdal chauffé, dans lequel, à une température de 140 à 300 °C, une phase liquide et une phase vapeur se forment, un courant de vapeur d'eau et/ou de gaz inerte étant éventuellement encore introduit dans le mélange avant le tube hélicoïdal, et une détente à approximativement la pression atmosphérique ayant lieu lors du passage du mélange dans le tube hélicoïdal,
c) la phase vapeur formée à l'étape b) est séparée de la phase liquide et séparée dans une colonne en vapeur d'eau et en composants organiques contenant des diamines, des acides dicarboxyliques et des lactames, et les composants organiques sont recyclés dans la polymérisation à l'étape d),
d) la phase liquide du tube hélicoïdal de l'étape b) mélangée avec les composants organiques de l'étape c) est conduite du haut vers le bas dans un tube de polymérisation vertical à des températures auxquelles un polyamide se forme, et un copolyamide est obtenu,
la phase vapeur qui se forme à partir du mélange lors du passage dans le tube hélicoïdal étant séparée de la phase liquide dans la tête du tube de polymérisation vertical et la phase vapeur issue de la tête du tube de polymérisation étant séparée dans une colonne en vapeur d'eau et en une phase organique contenant des diamines, des acides dicarboxyliques et des lactames, et la phase organique étant recyclée dans la tête du tube de polymérisation vertical.

2. Procédé selon la revendication 1, **caractérisé en ce que** des solutions aqueuses de quantités équimolaires de diamines de formule I
H₂N-R₁-NH₂ I
dans laquelle R₁ représente un radical alkylène de 4 à 16 atomes de carbone, qui peut comprendre un radical cycloalkylène, ou un radical 1,3- ou 1,4-phénylène, et d'acides dicarboxyliques de formule II
HOOC-R₂-COOH II,
dans laquelle R₂ représente un radical alkylène de 4 à 12 atomes de carbone ou un radical 1,3- ou 1,4-phénylène, sont utilisées.

3. Procédé selon la revendication 1 ou 2, **caractérisé en ce que** des lactames contenant 6 à 12 éléments de cycle sont utilisés.

4. Procédé selon la revendication 3, **caractérisé en ce que** du caprolactame est utilisé en tant que lactame.

5. Procédé selon l'une quelconque des revendications 1 à 4, **caractérisé en ce qu'**à l'étape (a), du lactame, qui a été obtenu par extraction du copolyamide avec de l'eau, puis évaporation de l'extrait aqueux avec ajout de lactame frais, est utilisé en outre.

6. Procédé selon l'une quelconque des revendications 1 à 5, **caractérisé en ce qu'**à l'étape (a), une température de 130 à 200 °C est maintenue.

7. Procédé selon l'une quelconque des revendications 1 à 6, **caractérisé en ce qu'**à l'étape a), une pression de 5 à 20 bar est maintenue.

8. Procédé selon l'une quelconque des revendications 1 à 7, **caractérisé en ce que** la température dans l'évaporateur à tube hélicoïdal est de 160 à 300 °C.

9. Procédé selon l'une quelconque des revendications 1 à 8, **caractérisé en ce que** la quantité de sels de diamines et d'acides dicarboxyliques, par rapport à la quantité totale de monomères, est de 0,2 à 40 % en moles.
